# EUROPEAN PATENT SPECIFICATION

(11) **EP 2 932 352 B1**
(45) Date of publication and mention of the grant of the patent: **21.11.2018**
(21) Application number: 13802686.9
(22) Date of filing: 12.12.2013
(51) Int. Cl.: G06F 3/01, B60K 37/00

(54) **TOUCH SYSTEM AND METHOD**
BERÜHRUNGSSYSTEM UND -VERFAHREN
SYSTÈME ET PROCÉDÉ TACTILE

(30) Priority: 13.12.2012 GB 201222437
(43) Date of publication of application: 21.10.2015
(73) Proprietor: Jaguar Land Rover Limited, Coventy, Warwickshire CV3 4LF (GB)
(72) Inventor: DALE, Martin, Coventry, Warwickshire CV3 4LF (GB); SKRYPCHUK, Lee, Coventry, Warwickshire CV3 4LF (GB)
(74) Representative: Bhimani, Alan
(86) International application number: PCT/EP2013/076419
(87) International publication number: WO 2014/090955

(56) References cited:
- WO-A1-2004/022388
- US-A1- 2002 185 981
- US-A1- 2007 139 371

## Description

### FIELD OF THE INVENTION

The present invention relates to touch sensitive systems or touch systems and to a method of controlling a touch system. In particular embodiments of the invention relate to multi-user touch systems. Aspects of the invention relate to a system, to a vehicle and to a method.

### BACKGROUND

It is known to provide a multi-user touch system in which a surface is provided bearing a pattern of mounted antennas. In some known systems a transmitter transmits uniquely identifiable signals to each antenna, and receivers are capacitively coupled to different users. The signals are transmitted using either time, frequency or code division multiplexing and the receivers must therefore be connected to the transmitter in order to receive synchronisation timing signals. In known systems each receiver is tethered to the system; when a user touches an antenna, the user's receiver receives the transmitted signal and communicates the received signal to the transmitter, allowing the system to determine which antenna a given user has touched. US 2007/0139371 A1 discloses a system for differentiating user controls by arranging a conductive surface in a close approximation to each control. US 2002/0185981 A1 discloses a multi-user touch system including a surface on which are a pattern of mounted antennas. WO 2004/022388 A1 discloses a control system for a vehicle subsystem.

A disadvantage of known systems is that the transmitter and the receivers must be physically connected in order to allow synchronisation. That is, the system is a 'closed loop' system. In the case of a system integrated into a motor vehicle, the receiver may be integrated into a seat of the vehicle such that the receiver is capacitively coupled to a user when the user is sat in the seat. The electrical connection between the transmitter and receiver is integrated into a wiring loom of the vehicle. This has the disadvantage that if the loom is disturbed and the connection broken, the touch sensitive system is rendered inoperable.

### STATEMENT OF THE INVENTION

Embodiments of the invention may be understood with reference to the appended claims. Aspects of the present invention provide a system, a vehicle and a method.

In one aspect of the invention for which protection is sought there is provided a multi-user touch system comprising:
transmitter means comprising at least one transmitter and a plurality of transmitter antennae, the transmitter means being operable to apply a respective different encoded signal to each of the transmitter antennae by means of the at least one transmitter; and
receiver means comprising at least one receiver and a plurality of receiver antennae, the receiver means being operable to receive by means of one of the receiver antennae an encoded signal applied to one of the transmitter antennae when a user selectively couples a transmitter antenna and a receiver antenna to one another by means of at least a portion of the user's body,
the receiver means being operable to determine an identity of the transmitter antenna that transmitted the received signal by decoding the received signal using stored receiver reference data, and wherein the decoding does not rely on a link between the transmitter apparatus and each receiver. Optionally reference data is stored by the receiver means. Embodiments of the invention have the advantage that because the receiver means is able to determine the identity of the transmitter antenna by reference to the received signal and stored reference data, the receiver means does not need to be connected to the transmitter means. The system therefore implements an 'open loop' identification methodology in contrast to known closed-loop systems. This allows a system with increased flexibility and user-friendly operation to be realised. A multi-user touch system may be made more reliable because operation of the system does not rely on a link between the transmitter means and receiver means, for example a wired link. As described above, known multi-user touch systems rely on such a link to provide synchronisation signals to a receiver in order to allow decoding of a received signal.
Some embodiments of the present invention have the advantage that timing and synchronisation signals do not need to be transmitted from the transmitter means to the receiver means in real time in order to enable decoding of encoded signals received by the receiver means. Instead, the receiver means refers to stored receiver reference data in order to decode the signals.
The receiver means may be operable to provide an output providing an indication of the identity of the transmitter antenna that transmitted the received signal.

Advantageously the at least one receiver may be operable to transmit a signal providing an indication of the identity of the transmitter antenna that transmitted the received signal by means of a wireless transmission means, optionally a radio signal such as a wi-fi signal or a short range radio signal such as Bluetooth (RTM).

The at least one receiver may be further operable to provide an output providing an indication of an identity of the transmitter antenna that transmitted the received signal and of the receiver antenna that received the received signal.

The transmitter means may be operable to apply a different encoded signal to each of the transmitter antennae by code division multiplexing (CDM) or frequency division multiplexing.

The reference data may include the codes or frequencies by means of which the received signal is encoded.

Advantageously the plurality of transmitter antennae may be provided on or just below a surface of one or more user input devices.

The plurality of transmitter antennae may be arranged to be coupled capacitively to a receiver antenna that is coupled to a respective user when a user touches the surface of the one or more user input devices.

Thus, when a user, who is coupled to a receiver antenna, touches the surface of one of the input devices, one of the plurality of transmitter antennae may be coupled capacitively to the user's receiver antenna.

The plurality of receiver antennae may be arranged to be substantially permanently coupled to a respective user when the system is in use. For example, each user may wear a garment comprising a receiver antenna, have a receiver antenna coupled to a limb, for example by means of a wrist strap, or coupled to a body portion such as their torso by means of a belt, or the user may be coupled to the receiver antenna by sitting on an antenna or a seat in which an antenna is provided, for example close to a surface of the seat where the user is seated such as a seat bottom, a seat back, a head rest or the like. Other arrangements are also useful.

Alternatively, the plurality of receiver antennae may be provided on or just below a surface of one or more user input devices.

The plurality of receiver antennae may be arranged to be coupled capacitively to a transmitter antenna that is coupled to a respective user when a user touches the surface of the one or more user input devices.

The plurality of transmitter antennae may be arranged to be substantially permanently coupled to a respective user when the system is in use. For example, each user may wear a garment comprising a transmitter antenna, have a transmitter antenna coupled to a limb, for example by means of a wrist strap, or coupled to a body portion such as their torso by means of a belt, or the user may be coupled to the transmitter antenna by sitting on an antenna or a seat in which an transmitter is provided, for example close to a surface of the seat where the user is seated such as a seat bottom, a seat back, a head rest or the like. Other arrangements are also useful.

The one or more user input devices may be selected from amongst a touch screen, a rotary dial or knob, a switch and a button.

It is to be understood that because the system is able to determine the identity of the user touching the input device, the system may perform a corresponding control action in respect of that particular user, optionally unique to that particular user. For example, if the user requests a change in cabin air temperature, the system may provide an output responsive to which a heating, ventilation and air-conditioning (HVAC) system changes the temperature of cabin air associated with the user touching the control. Thus if the driver operates the input device, the system may detect that the driver has touched the device and command a change in air temperature associated with the driver and not a passenger. Likewise if a passenger touches the control the system may command a change in air temperature associated with the passenger and not the driver.

In a further aspect of the invention for which protection is sought there is provided a control system comprising a multi-user touch system according to a preceding aspect.

The control system may be operable to perform at least one action in response to detection of manipulation of an input device by a user, the system being operable to perform different respective actions in dependence on the identity of the user.

The control system may be operable to control at least one motor vehicle system.

The control system may be operable to control at least one selected from amongst an informatics system, a heating, ventilation and air-conditioning system and a navigation system of a motor vehicle.

In a still further aspect of the invention for which protection is sought there is provided a motor vehicle comprising a multi-user touch system according to a preceding aspect.

In an aspect of the invention there is provided a motor vehicle comprising a control system according to a preceding aspect.

In one aspect of the invention for which protection is sought there is provided a method of providing multi-user touch system functionality comprising:
applying a respective different encoded signal to each one of a plurality of respective transmitter antennae by means of at least one transmitter; and
receiving at a receiver by means of one of a receiver antennae an encoded signal applied to one of the transmitter antennae when a user coupled to the receiver selectively couples to one or the plurality of transmitter antenna by means of at least a portion of the user's body,
the method comprising determining an identity of the transmitter antenna that transmitted the received signal by decoding the received signal at said receiver using stored reference data, and wherein the decoding does not rely on a link between the at least one transmitter and said receiver.

Optionally the reference data is stored by the receiver.

The method may comprise providing an output corresponding to an identity of the transmitter antenna and an identity of the receiver antenna.

Within the scope of the claims it is expressly intended that the various aspects, embodiments, examples and alternatives set out in the preceding paragraphs, and/or in the following description and drawings, and in particular the individual features thereof, may be taken independently or in any combination. Features described with reference to one embodiment are applicable to all embodiments, unless such features are incompatible.

### BRIEF DESCRIPTION OF THE DRAWINGS

Embodiments of the invention will now be described, by way of example only, with reference to the accompanying figures in which:
FIGURE 1 is a schematic illustration of a multi-user touch system according to an embodiment of the present invention; and
FIGURE 2 is a schematic illustration of a motor vehicle dashboard incorporating a multi-user touch system according to an embodiment of the present invention.

### DETAILED DESCRIPTION

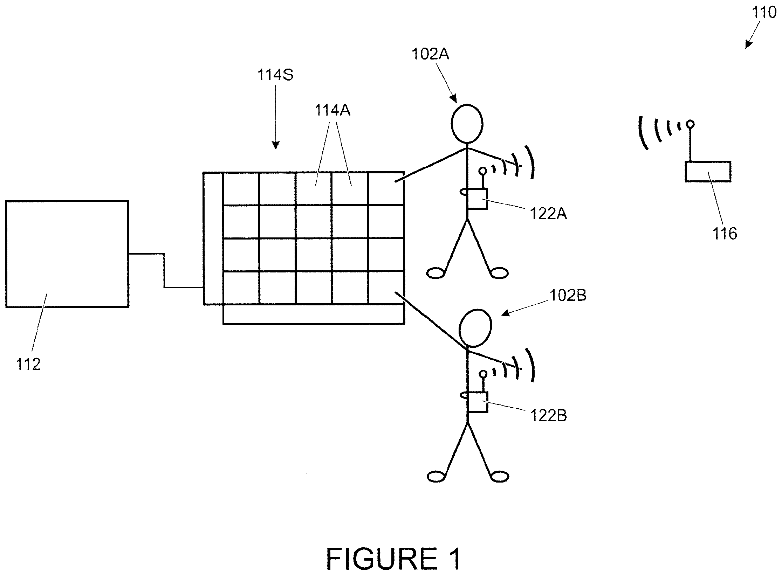

As shown in FIG. 1, a multi-user touch system 110 according to an embodiment of the present invention has a transmitter module 112 connected to a touch screen 114S. The screen 114S has four rows of antenna elements 114A each row comprising five elements 114A. The transmitter module 112 is operable to provide a unique signal to each respective element 114A. In the present embodiment, the transmitter generates a high frequency RF (radio frequency) signal which is subsequently modulated according to an encoding sequence to spread the signal across a broader spectrum (i.e. according to a spread spectrum technique). In the present embodiment code division multiplexing (CDM) is employed. It is to be understood that CDM employs orthogonal codes to spread each signal over a relatively large, common frequency band. Other methods are also useful. The unique encoded signals are then fed to respective antenna elements 114A.

Each user of the system 110 carries a receiver module, or receiver, 122A, 122B comprising a receiver antenna operable to detect the signal transmitted by the transmitter module 112 when a corresponding user 102A, 102B touches an antenna element 114A of the screen 114S. When a user touches an element 114A a signal transmitted by the transmitter module 112 is coupled capacitively to the receiver antenna of the receiver module 122A, 122B carried by the user touching the element 114A, enabling the receiver module 122A, 122B to receive the signal transmitted by the transmitter module 112.

In some embodiments each user is coupled to a respective receiver. The receiver may take any other form such that the user is able to retain the receiver in sufficient proximity to their person to enable the coupling of the user to their respective receiver. For example, the receiver may be kept in a pocket of the user's clothing or may be worn by the user. Example forms of the receiver therefore include a wrist strap, a key fob, a dongle and other suitable configurations of receiver.

It is to be understood that each receiver module 122A, 122B is provided with data stored in a memory thereof corresponding to the spreading codes generated by the transmitter module 112 and used to encode the signals transmitted to respective antenna elements 114A. The receiver module 122A, 122B is arranged to cross-correlate the received signal with the codes. The receiver module 122A, 122B identifies peaks in the cross-correlated spectrum that are generated when the corresponding code (being the code by means of which the signal was encoded) is cross-correlated with the received signal. The receiver module 122A, 122B is thereby able to identify the antenna element 114A touched by the user.

In some embodiments, once a receiver module 122A, 122B has determined which antenna the user 102A, 102B has touched, the module 122A, 122B is arranged to transmit a signal containing a unique identifier of the receiver module 122A, 122B and an identity of the antenna element 114A touched by the user to a controller module 116. In some embodiments the identity of the antenna element 114A touched by the user may be transmitted by a receiver module 122A, 122B in the form of coordinates of the antenna element 114A.

Example embodiments of the invention provide a system by which multiple users may control multiple devices through interaction with one or more device. In an example use, multiple visitors 102A, 102B to a museum are each provided with a receiver 122A, 122B. Transmitter modules 114S located in the museum, for example in the form of interactive buttons, may be pressed by each user so as to form a coupling between the user and transmitter. On coupling of the user 102A, 102B to the transmitter 114S, the receiver module 122A, 122B receives a signal transmitted by the transmitter antenna 114A. The receiver module interprets the received signal according to hereinmentioned methods. The receiver module 122A, 122B then transmits a signal containing a unique identifier of the transmitter module in the museum and the user to whom that transmitter has been coupled to a controller 116, which responds to the transmitted signal in a manner dependent on the user. This may be particularly useful if the museum contains information relevant to children and adults and where that information should only be displayed to the relevant group. A child 102B, equipped with a receiver 122B that is configured to identify the child, may for example couple to a transmitter 114A in the form of a button labelled "press here for information". This would result in the child's receiver 122B transmitting a signal to a controller 116 for a display to instruct that display to display information relevant to the child 102B. In another example, each receiver may be configured to identify the preferred language of the respective user to which the receiver in coupled such that information displayed to the museum visitors may be dependent on their nationality so that information is presented only in the language preferred by each visitor.

In another example embodiment, multiple users may interact with a single touch screen display. Each user 102A, 102B is coupled to a receiver 122A, 122B that is configured to identify the user. A graphics controller 116 operating the display is configured to, for example, draw a point on the screen at a particular location when a user 102A, 102B touches the screen 114S in that particular location, in a colour dependent on the user who has touched the screen. On touching the screen 114S with a finger, a transmitter antenna 114A in the screen couples to the user's finger so that the signal transmitted by the transmitter antenna 114A is received by the receiver antenna 122A, 122B, which is also coupled to the user 102A, 102B, but not necessarily to their finger. The receiver identifies the transmitter antenna 114A using hereinmentioned methods and subsequently transmits a control signal to the graphics controller 116, which interprets that signal and in response draws a point in a colour relevant to that user at the location on the screen 114S of the transmitter antenna 114A.

Signals transmitted by a receiver module 122A, 122B to the controller module 116 may be transmitted by means of a wired connection such as a USB connection or a wireless connection. Suitable wireless connections include but are not limited to an infra-red link, an ultrasonic link or a radio link such as a long range radio link (such as a general packet radio service (GPRS) link), a medium range radio link (such as a wi-fi link), or a short range radio link such as a Bluetooth (RTM) link. Other arrangements are also useful.

In some alternative embodiments the transmitter module 112 may be arranged to transmit a signal encoded according to a frequency division multiplex (FDM) methodology in which each antenna element 114A receives a unique identifier signal transmitted at a respective different carrier frequency to the other antenna elements 114A. The receiver modules 122A, 122B are arranged to determine the frequency of the carrier signal received when a user touches an antenna element 114A and subsequently to read the unique identifier signal carried by the received carrier signal. The unique identifier may contain data indicating the identity of the antenna element 114A the user has touched.

It is to be understood that in some alternative embodiments the receiver modules 122A, 122B are arranged to determine the identity of the antenna element 114A touched by the user responsive to a determination of the frequency of the carrier signal detected. The receiver modules 122A, 122B are provided with data by means of which they may determine a correspondence between a given antenna and the frequency of the carrier signal received.

In some embodiments each receiver module 122A, 122B may be operable to receive reference data by means of which the module 122A, 122B is able to determine a correspondence between a signal received when a user touches an antenna element 114A and the antenna element 114A touched by the user.

In embodiments operating according to a CDM methodology the receiver modules 122A, 122B may be arranged to receive data, for example from the transmitter module 112, indicative of a correspondence of a given code with a given antenna element 114A. In embodiments operating according to a FDM methodology the receiver modules 122A, 122B may be arranged to receive data, for example from the transmitter module 112, indicative of the correspondence of a given carrier frequency with a given antenna element 114A. The data may be received for example each time the system 110 is powered up, or periodically during use. Other arrangements are also useful.

In some embodiments the receiver modules 122A, 122B may already be provided with the required decoding data according to the CDM or FDM methodology used, the data remaining substantially unchanged through the course of a service life of the system 110. The receiver modules 122A, 122B may therefore not be required to receive decode data from an external source.

In some embodiments the transmitter module 112 and receiver modules 122A, 122B are each arranged to generate a substantially identical set of codes and determine a correspondence between the codes and each antenna element 114A independently of one another. In some embodiments the transmitter module 112 and receiver modules 122A, 122B are provided with a pseudo random number (PRN) generator and arranged to employ the same seed code to generate a string of random numbers corresponding to the codes to be employed for respective antenna elements 114A. The transmitter module 112 and receiver modules 122A, 122B may determine the seed code according to a satellite global positioning system (GPS) clock signal or other means. The modules 112, 122A, 122B may synchronise generation of codes using the GPS clock signal. For example at prescribed intervals (such as every second, few seconds or at any other suitable interval) the modules 112, 122A 122B may supply an identical seed code to their respective PRN generator in order to generate substantially identical codes.

The PRN generator may be arranged to employ a maximum length sequence (MLS) or any other suitable methodology.

Embodiments of the present invention provide a multi-user touch-sensitive system operable uniquely to identify a user touching a surface. The system is also operable in some embodiments to provide an output corresponding to the location on a surface of a touched portion of the surface. In the case of a touch screen, for example, the system may be operable to provide an output corresponding to the specific location touched by the user, for example an (x, y) coordinate with respect to an area of the screen of the location of the screen touched by the user.

In some embodiments the system may be operable to provide an indication of the identity of an input device touched by a given user such as a selector switch, for example a rocker switch, a rotary dial or any other suitable input device.

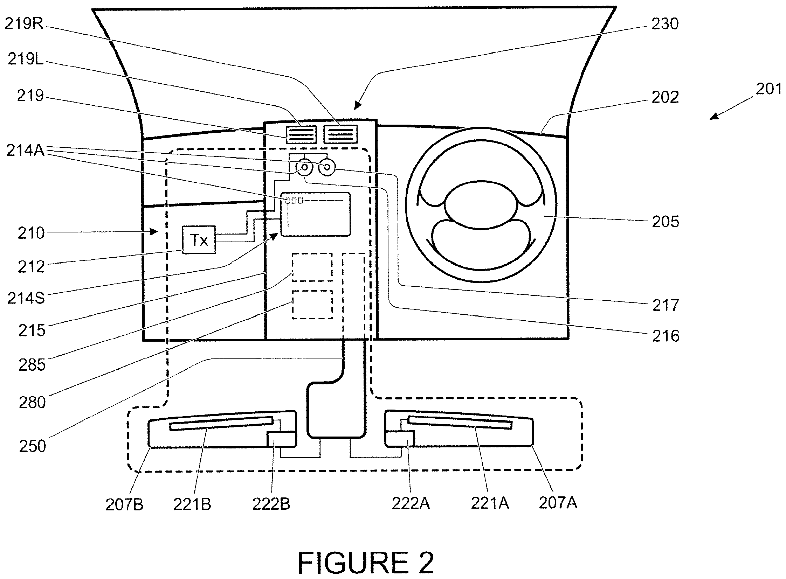

FIG. 2 shows a portion of an interior of a motor vehicle cabin 201 of a vehicle having a multi-user touch system 210 according to an embodiment of the present invention. The cabin 201 has a dashboard 202 having a centre console 215, a steering wheel 205, a driver seat 207A and a passenger seat 207B. The driver and passenger seats 207A, 207B have a respective antenna element 221A, 221B provided immediately below an outer surface of a seat bottom portion thereof upon which a user sits. The antenna elements 221A, 221B are coupled electrically to a respective receiver module 222A, 222B. The receiver modules 222A, 222B are operable to communicate with a controller area network (CAN) bus 250 of the vehicle whereby data may be broadcast to vehicle subsystems connected thereto.

The centre console 215 bears a touch screen 214S of the type illustrated in FIG. 1 and a pair of rotary dials 216, 217. An air vent unit 219 is mounted above the rotary dials 216, 217, the unit 219 having respective left and right vents 219L, 219R operable to deliver a flow of air from an HVAC system 280 to a passenger and driver respectively.

The touch screen 214S is provided with an array of antenna elements 214A over a surface thereof. The rotary dials 216, 217 are each provided with a similar antenna element 214A to the elements 214A of the touch screen 214S. The element 214A of each rotary dial 216, 217 may for example be coupled to a conductive portion of the dial 216, 217 touched by a user when manipulating the dial such as a metallic trim portion of the dial 216, 217 in order to facilitate establishment of an electrical connection between the user and element 214A of the respective dial 216, 217. Other arrangements are also useful.

A transmitter module 212 is operable to transmit respective different encoded signals to each respective antenna element 214A of the touch system 210. As in the case of the embodiment of FIG. 1, the transmitter module 212 generates a high frequency RF signal which is subsequently modulated according to a code division multiplexing (CDM) spread-spectrum technique to generate a unique encoded signal for each respective antenna element 214A.

In use, when a user seated on one of the seats 207A, 207B touches a portion of the touch screen 214S bearing an antenna element 214A or one of the rotary dials 216, 217 the receiver 222A, 222B corresponding to the seat in which the user is sitting detects an encoded signal. The signal identifies uniquely the antenna element 214A associated with the surface or portion thereof touched by the user. In an alternative embodiment a single receiver module is coupled to both antenna elements 221A, 221B instead of respective receiver modules 222A, 222B.

As described above with respect to the embodiment of FIG. 1 each receiver module 222A, 222B is provided with data stored in a memory thereof corresponding to the spreading codes generated by the transmitter module 212 and used to encode the signals transmitted to respective antenna elements 214A. The receiver modules 222A, 222B are arranged to cross-correlate the received signal with the codes. The modules 222A, 222B identify peaks in the cross-correlated spectrum that are generated when the corresponding code (being the code by means of which the signal was encoded) is cross-correlated with the received signal. The receiver module 222A, 222B is thereby able to identify the antenna element 114A touched by the user.

Once the respective receiver module 222A, 222B has determined which antenna element 114A has been touched by the user, the module 222A, 222B broadcasts a signal on the CAN bus 250 in respect of the antenna element 214A the user has touched and the identity of the user. The identity of the user may be determined by reference to a signal transmitted by the respective module 222A, 222B identifying the module 222A, 222B that received the signal. Vehicle subsystems connected to the CAN bus 250 such as HVAC system 280 and infotainment system 285 are therefore able to determine the identity of the user touching a given dial 216, 217 and/or the location of the touch screen 214S touched by a user and the identity of the user touching the touch screen 214S at that location.

A controller of the vehicle HVAC system 280 is operable to receive a signal directly from the dials 216, 217 whenever one of the dials is rotated. From the received signal the controller determines a direction of rotation of the dial 216, 217, a speed of rotation and an amount by which the dial is rotated. The system is arranged to control the HVAC system 280 according to signals received from the dials 216, 217, taking into account the identity of the person operating the dial 216, 217, the latter information being determined by reference to the signal transmitted on the CAN bus 250 by a receiver module 222A, 222B.

It is to be understood that the dials 216, 217 may be operable to perform different functions in respect of the flow of air through the vents 219L, 219R. For example, one dial 216 may be operable to vary a temperature of the air and the other 217 operable to vary a flow rate of the air. If a user sat in the left hand seat 207B manipulates a dial 216, 217 the HVAC system 280 may be arranged to perform the corresponding control action in respect of air flowing through the left hand vent 219L whilst if a user sat in the right hand seat 207A manipulates a dial 216, 217 the HVAC system 280 may be arranged to perform the corresponding control action in respect of air flowing through the right hand vent 219R. Other arrangements are also useful.

The controller of the HVAC system 280 also monitors signals in respect of the touch screen 214S and responds accordingly to control signals to switch on or off the HVAC system 280. Likewise, the infotainment system 285 also monitors signals in respect of the touch screen 214S and responds accordingly to control signals in respect of the system 285, such as changes in function selected (such as audio system, navigation system and the like).

In some embodiments, one of more functions associated with one of more vehicle systems or sub-systems may only be available to a driver or passenger at a given moment in time.

For example, operation of the infotainment system 285 to adjust the time setting of a time clock of the vehicle may be made available to a passenger seated in passenger seat 207B at any time, but not to a driver seated in driving seat 207A whilst the vehicle is moving. The infotainment system 285 is able to determine whether a driver or passenger is manipulating a given control input by reference to the signal transmitted on the CAN bus 250 by a receiver module 222A, 222B in response to touching of the screen 214S by the user, and/or by reference to the identity of the receiver module 222A, 222B that transmitted the signal, Other arrangements are also useful.

It is to be understood that embodiments of the invention may described as implementing remote orthogonal encoding of signals, and remote orthogonal decoding of the signals. By remote is meant that a real time direct connection between a signal transmitter and a signal receiver other than that formed when a user establishes capacitive coupling between a transmitter antenna and a receiver antenna is not required in order to enable the receiver to decode the transmitted signals. Thus, a real time connection providing signals such as timing and/or synchronisation signals is not required in order for the receiver to decode the signals.
Some embodiments of the invention may be understood by reference to the following brief description.
Embodiments of the present invention relate to a multi-user touch system. In some embodiments such a system enables a controller to identify which one of a plurality of users has touched an input device such as a touchscreen or a rotary dial or switch.
In one embodiment a transmitter apparatus transmits a unique encoded signal to a respective antenna that is provided at each of the input devices. Where the input device includes a touch screen with touch-sensitive locations, each respective location may have a respective antenna provided thereat. Users are coupled to respective antennae of a receiver apparatus. Each user may carry a receiver antenna and optionally a receiver of the receiver, for example in a garment, or attached to a belt of the user or any other suitable means. Alternatively the antenna and optionally the receiver may be provided in a seat on which the user sits, such as a conference chair or a motor vehicle seat.
When a user touches the input device, the user forms a capacitive coupling between the transmitter antenna and receiver antenna. The encoded signal transmitted by the transmitter antenna is received by the receiver which decodes the signal by reference to the received signal and receiver reference data. Importantly, the receiver does not need to maintain a constant link with the transmitter in order to form a closed loop for decoding the received signal. The data stored by the receiver or accessed by the receiver is sufficient to enable decoding to take place. That is, stored data, in some embodiments 'off-line data' may be used to decode the signals. In contrast, in prior art systems the receiver and transmitter are permanently connected by a hardwire connection that feeds timing and synchronisation signals to the receiver in real time so as to enable decoding of encoded signals received by the receiver. Such real-time feeding of timing and/or synchronisation signals is not required by embodiments of the present invention.

Throughout the description and claims of this specification, the words "comprise" and "contain" and variations of the words, for example "comprising" and "comprises", means "including but not limited to", and is not intended to (and does not) exclude other moieties, additives, components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith.

## Claims

1. A multi-user touch system comprising:
transmitter apparatus comprising at least one transmitter (112) and a plurality of transmitter antennae (114A), the transmitter apparatus being operable to apply a respective encoded signal to each of the transmitter antennae (114A) by means of the at least one transmitter (112); and
a plurality of receivers (122A, 122B), each arranged to be coupled to a respective user (102A, 102B) and comprising a receiver antenna operable to receive an encoded signal applied to one of the transmitter antennae (114A) when the respective user (102A, 102B) selectively couples to one of the plurality of transmitter antennae by means of at least a portion of the respective user's body,
each receiver (122A, 122B) being operable to determine an identity of the transmitter antenna (114A) that transmitted the received signal by decoding the received signal using stored reference data, and wherein the decoding does not rely on a link between the transmitter apparatus and each receiver.

2. A system as claimed in claim 1 wherein each receiver (122A, 122B) is operable to provide an output providing an indication of the identity of the transmitter antenna (114A) that transmitted the received signal.

3. A system as claimed in claim 2 wherein: the output is provided by means of a wireless transmission apparatus, optionally a radio signal such as a wi-fi signal or a short range radio signal such as Bluetooth (RTM); or
the output provides an indication of an identity of the receiver (122A, 122B) that received the received signal.

4. A system as claimed in any preceding claim, wherein the transmitter apparatus is operable to apply a different encoded signal to each of the transmitter antennae (114A) by code division multiplexing (CDM) or frequency division multiplexing.

5. A system as claimed in claim 4 wherein the reference data includes the codes or frequencies by means of which the received signal is encoded.

6. A system as claimed in any preceding claim, wherein the plurality of transmitter antennae (114A) are provided on or just below a surface of one or more user input devices (102A, 102B).

7. A system as claimed in claim 6, wherein the plurality of transmitter antennae (114A) are arranged to be coupled capacitively to a receiver antenna that is coupled to a respective user when the respective user (102A, 102B) touches the surface of the one or more user input devices,
and/or wherein the one or more user input devices are selected from amongst a touch screen, a rotary dial or knob, a switch and a button.

8. A system as claimed in any preceding claim, wherein the reference data is stored by each receiver (122A, 122B)

9. A control system comprising a multi-user touch system as claimed in any preceding claim.

10. A control system as claimed in claim 9, wherein the plurality of transmitter antennae (114A) are provided on or just below a surface of one or more user input devices, the system being operable to perform at least one action in response to detection of manipulation of an input device by a user (102A, 102B), the system being operable to perform different respective actions in dependence on the identity of the user (102A, 102B).

11. A control system as claimed in claim 9 or 10 operable to control at least one motor vehicle system.

12. A control system as claimed in claim 11 operable to control at least one selected from amongst an informatics system, a heating, ventilation and air-conditioning system and a navigation system of a motor vehicle.

13. A motor vehicle comprising: a multi-user touch system as claimed in any of claims 1 to 8; or a control system as claimed in any of claims 9 to12.

14. A method of providing multi-user touch system functionality comprising:
applying a respective different encoded signal to each one of a plurality of respective transmitter antennae by means of at least one transmitter (112);
receiving at a receiver (122A, 122B) by means of a receiver antennae an encoded signal applied to one of the transmitter antennae (114A) when a user coupled to the receiver (122A, 122B) selectively couples to one of the plurality of transmitter antenna (114A) by means of at least a portion of the user's body;
determining an identity of the transmitter antenna (114A) that transmitted the received signal by decoding the received signal at said receiver using stored reference data, and wherein the decoding does not rely on a link between the at least one transmitter and said receiver;
the method optionally comprising providing an output corresponding to an identity of the transmitter antenna (114A) and an identity of the receiver antenna.

15. Computer program code, or a computer readable medium storing computer program code, said code configured to implement the method of claim 14 when run on a computing system.

## Patentansprüche

1. Mehrbenutzer-Touchsystem, Folgendes umfassend:
Sendereinrichtung, die wenigstens einen Sender (112) und mehrere Senderantennen (114A) umfasst, wobei die Sendereinrichtung betriebsfähig ist, ein entsprechendes verschlüsseltes Signal mittels des wenigstens einen Senders (112) auf jede der Senderantennen (114A) anzulegen; und
mehrere Empfänger (122A, 122B), die jeweils angeordnet sind, mit einem entsprechenden Benutzer (102A, 102B) gekoppelt zu sein, und eine Empfangsantenne umfassen, die betriebsfähig ist, ein auf eine der Senderantennen (114A) angelegtes verschlüsseltes Signal zu empfangen, wenn der entsprechende Benutzer (102A, 102B) mittels wenigstens eines Teils des Körpers des entsprechenden Benutzers selektiv mit einer der mehreren Senderantennen gekoppelt wird,
wobei jeder Empfänger (122A, 122B) betriebsfähig ist, eine Identität der Senderantenne (114A), die das empfangene Signal übertragen hat, durch Entschlüsseln des empfangenen Signals unter Verwendung von gespeicherten Referenzdaten zu bestimmen, und wobei das Entschlüsseln nicht auf einer Verknüpfung zwischen der Sendereinrichtung und jedem Empfänger beruht.

2. System nach Anspruch 1, wobei jeder Empfänger (122A, 122B) betriebsfähig ist, eine Ausgabe bereitzustellen, die einen Hinweis auf die Identität der Senderantenne (114A), die das empfangene Signal übertragen hat, bereitstellt.

3. System nach Anspruch 2, wobei: die Ausgabe mittels einer drahtlosen Übertragungsvorrichtung, optional eines Funksignals, wie etwa eines WiFi-Signals, oder eines Funksignals mit kurzer Reichweite, wie etwa Bluetooth (RTM), bereitgestellt wird; oder
die Ausgabe einen Hinweis auf eine Identität des Empfängers (122A, 122B), der das empfangene Signal empfangen hat, bereitstellt.

4. System nach einem der vorhergehenden Ansprüche, wobei die Sendereinrichtung betriebsfähig ist, durch Codemultiplex (CDM) oder Frequenzmultiplex ein anderes verschlüsseltes Signal auf jede der Senderantennen (114A) anzulegen.

5. System nach Anspruch 4, wobei die Referenzdaten die Codes oder Frequenzen enthalten, durch die das empfangene Signal verschlüsselt wird.

6. System nach einem der vorhergehenden Ansprüche, wobei die mehreren Senderantennen (114A) auf oder direkt unter einer Oberfläche einer oder mehrerer Benutzereingabevorrichtungen (102A, 102B) bereitgestellt sind.

7. System nach Anspruch 6, wobei die mehreren Senderantennen (114A) angeordnet sind, kapazitiv mit einer Empfangsantenne, die mit einem entsprechenden Benutzer gekoppelt ist, gekoppelt zu werden, wenn der entsprechende Benutzer (102A, 102B) die Oberfläche der einen oder der mehreren Benutzereingabevorrichtungen berührt,
und/oder wobei die eine oder die mehreren Benutzereingabevorrichtungen aus einem Touchscreen, einem Drehwähler oder -knopf, einem Schalter und einer Taste ausgewählt sind.

8. System nach einem der vorhergehenden Ansprüche, wobei die Referenzdaten von jedem Empfänger (122A, 122B) gespeichert werden.

9. Steuersystem, das ein Mehrbenutzer-Touchsystem nach einem der vorhergehenden Ansprüche umfasst.

10. Steuersystem nach Anspruch 9, wobei die mehreren Senderantennen (114A) auf oder direkt unter einer Oberfläche einer oder mehrerer Benutzereingabevorrichtungen bereitgestellt sind, wobei das System betriebsfähig ist, wenigstens eine Maßnahme als Reaktion auf das Erfassen einer Manipulation einer Eingabevorrichtung durch einen Benutzer (102A, 102B) durchzuführen, wobei das System betriebsfähig ist, verschiedene entsprechende Maßnahmen abhängig von der Identität des Benutzers (102A, 102B) durchzuführen.

11. Steuersystem nach Anspruch 9 oder 10, das betriebsfähig ist, wenigstens ein Kraftfahrzeugsystem zu steuern.

12. Steuersystem nach Anspruch 11, das betriebsfähig ist, ein Informatiksystem, ein Heizungs-, Lüftungs- und Klimatisierungssystem und/oder ein Navigationssystem eines Kraftfahrzeugs zu steuern.

13. Kraftfahrzeug, das Folgendes umfasst: ein Mehrbenutzer-Touchsystem nach einem der Ansprüche 1 bis 8; oder ein Steuersystem nach einem der Ansprüche 9 bis 12.

14. Verfahren zum Bereitstellen einer Mehrbenutzer-Touchsystem-Funktionalität, Folgendes umfassend:
Anlegen eines entsprechenden unterschiedlichen verschlüsselten Signals auf jede von mehreren entsprechenden Senderantennen mittels wenigstens eines Senders (112);
Empfangen eines verschlüsselten Signals, das auf eine der Senderantennen (114A) angelegt wurde, an einem Empfänger (122A, 122B) mittels einer Empfangsantenne, wenn ein mit dem Empfänger (122A, 122B) gekoppelter Benutzer mittels wenigstens eines Teils des Körpers des Benutzers selektiv mit einer der mehreren Senderantennen (114A) gekoppelt wird;
Bestimmen einer Identität der Senderantenne (114A), die das empfangene Signal übertragen hat, durch Entschlüsseln des empfangenen Signals am Empfänger unter Verwendung der gespeicherten Referenzdaten, und wobei das Entschlüsseln nicht auf einer Verknüpfung zwischen dem wenigstens einen Sender und dem Empfänger beruht;
wobei das Verfahren optional das Bereitstellen einer Ausgabe umfasst, die einer Identität der Senderantenne (114A) und einer Identität der Empfangsantenne entspricht.

15. Computerprogrammcode oder computerlesbares Medium, auf dem Computerprogrammcode gespeichert ist, wobei der Code konfiguriert ist, das Verfahren nach Anspruch 14 zu implementieren, wenn er auf einem Computersystem ausgeführt wird.

## Revendications

1. Système tactile multiutilisateur comprenant :
un appareil émetteur comprenant au moins un émetteur (112) et une pluralité d'antennes émettrices (114A), l'appareil émetteur servant à appliquer un signal codé respectif à chacune des antennes émettrices (114A) au moyen dudit au moins un émetteur (112) ; et
une pluralité de récepteurs (122A, 122B), chacun étant conçu pour être couplé à un utilisateur (102A, 102B) respectif et comprenant une antenne réceptrice servant à recevoir un signal codé appliqué à l'une des antennes émettrices (114A) lorsque l'utilisateur (102A, 102B) respectif se couple sélectivement à une antenne émettrice parmi la pluralité d'antennes émettrices au moyen d'au moins une partie du corps de l'utilisateur respectif,
chaque récepteur (122A, 122B) servant à déterminer une identité de l'antenne émettrice (114A) qui a émis le signal reçu en décodant le signal reçu en utilisant des données de référence mémorisées, et le décodage ne faisant pas appel à une liaison entre l'appareil émetteur et chaque récepteur.

2. Système selon la revendication 1, dans lequel chaque récepteur (122A, 122B) sert à produire une sortie fournissant une indication de l'identité de l'antenne émettrice (114A) qui a émis le signal reçu.

3. Système selon la revendication 2, dans lequel : la sortie est produite au moyen d'un appareil de transmission sans fil, éventuellement d'un signal radio tel qu'un signal Wi-Fi ou un signal radio de courte portée tel que Bluetooth (RTM) ; ou
la sortie fournit une indication d'une identité du récepteur (122A, 122B) qui a reçu le signal reçu.

4. Système selon l'une quelconque des revendications précédentes, dans lequel l'appareil émetteur sert à appliquer un signal codé différent à chacune des antennes émettrices (114A) par multiplexage par répartition en code (CDM) ou par multiplexage par répartition en fréquence.

5. Système selon la revendication 4, dans lequel les données de référence comportent les codes ou les fréquences au moyen desquels le signal reçu est codé.

6. Système selon l'une quelconque des revendications précédentes, dans lequel la pluralité d'antennes émettrices (114A) est située sur une surface d'au moins un dispositif d'entrée d'utilisateur (102A, 102B) ou juste en dessous de celle-ci.

7. Système selon la revendication 6, dans lequel la pluralité d'antennes émettrices (114A) est conçue pour être couplée de manière capacitive à une antenne réceptrice qui est couplée à un utilisateur respectif lorsque l'utilisateur respectif (102A, 102B) touche la surface de l'au moins un dispositif d'entrée d'utilisateur,
et/ou dans lequel l'au moins un dispositif d'entrée d'utilisateur est sélectionné parmi un écran tactile, un cadran ou bouton rotatif, un commutateur et un bouton.

8. Système selon l'une quelconque des revendications précédentes, dans lequel les données de référence sont mémorisées par chaque récepteur (122A, 122B).

9. Système de commande comprenant un système tactile multiutilisateur selon l'une quelconque des revendications précédentes.

10. Système de commande selon la revendication 9, dans lequel la pluralité d'antennes émettrices (114A) est située sur une surface d'au moins un dispositif d'entrée d'utilisateur ou juste en dessous de celle-ci, le système servant à effectuer au moins une action en réponse à la détection d'une manipulation d'un dispositif d'entrée par un utilisateur (102A, 102B), le système servant à effectuer différentes actions respectives en fonction de l'identité de l'utilisateur (102A, 102B).

11. Système de commande selon la revendication 9 ou 10, servant à commander au moins un système de véhicule à moteur.

12. Système de commande selon la revendication 11, servant à commander au moins un système sélectionné parmi un système d'information, un système de chauffage, ventilation et climatisation et un système de navigation d'un véhicule à moteur.

13. Véhicule à moteur comprenant : un système tactile multiutilisateur selon l'une quelconque des revendications 1 à 8 ; ou un système de commande selon l'une quelconque des revendications 9 à 12.

14. Procédé permettant de produire une fonctionnalité de système tactile multiutilisateur, le procédé consistant à :
appliquer un signal codé différent respectif à chacune parmi une pluralité d'antennes émettrices respectives au moyen d'au moins un émetteur (112) ;
recevoir au niveau d'un récepteur (122A, 122B), au moyen d'une antenne réceptrice, un signal codé appliqué à l'une des antennes émettrices (114A) lorsqu'un utilisateur couplé au récepteur (122A, 122B) se couple sélectivement à une antenne émettrice parmi la pluralité d'antennes émettrices (114A) au moyen d'au moins une partie du corps de l'utilisateur ;
déterminer une identité de l'antenne émettrice (114A) qui a émis le signal reçu en décodant le signal reçu au niveau dudit récepteur en utilisant des données de référence mémorisées, et dans lequel le décodage ne fait pas appel à une liaison entre l'au moins un émetteur et ledit récepteur ;
le procédé consistant en outre éventuellement à produire une sortie correspondant à une identité de l'antenne émettrice (114A) et à une identité de l'antenne réceptrice.

15. Code de programme d'ordinateur ou support lisible par ordinateur mémorisant un code de programme d'ordinateur, ledit code étant conçu pour mettre en oeuvre le procédé selon la revendication 14 lorsqu'il est exécuté sur un système informatique.
